# EUROPÄISCHE PATENTSCHRIFT

(11) **EP 0 749 778 B1**
(45) Veröffentlichungstag und Bekanntmachung des Hinweises auf die Patenterteilung: **17.10.2001**
(21) Anmeldenummer: 96109566.8
(22) Anmeldetag: 14.06.1996
(51) Int. Cl.: B01J 20/26, C02F 1/68

(54) **Verwendung eines Cycloolefincopolymers als Absorptionsmittel**
Application of a cycloolefine copolymer as an absorption
L'application d' un copolymère de cyclooléfine comme un agent d'absorption

(30) Priorität: 19.06.1995 DE 19521561
(43) Veröffentlichungstag der Anmeldung: 27.12.1996
(73) Patentinhaber: Ticona GmbH, 65451 Kelsterbach (DE)
(72) Erfinder: Helmer-Metzmann, Freddy, Dr., 55270 Essenheim (DE); Jacobs, Alexandra, Dr., 65931 Frankfurt (DE)

(56) Entgegenhaltungen:
- EP-A- 0 524 674
- US-A- 4 604 321
- US-A- 4 935 475

## Beschreibung

Die vorliegende Erfindung bezieht sich auf Absorptionsmittel, welche Cycloolefincopolymere (COC) enthalten.

Zur Beseitigung von Verunreinigungen von Böden oder Gewässern mit zeitweilig oder ständig in die Umwelt gelangenden organischen Verbindungen wie Ölen, ist die vollständige Aufnahme und die Entsorgung dieser Verunreinigungen notwendig. Hierfür können Absorptionsmittel eingesetzt werden, die selektiv organische Verbindungen aufnehmen. Eine Anwendung von Absorptionsmitteln ist ebenfalls notwendig zur Beseitigung von Verunreinigungen wie Ölen, die bei technischen Verfahrensschritten in Flüssigkeiten oder Gase gelangen. Dabei ist nicht nur die vollständige und ökologisch unbedenkliche Entfernung der Verunreinigungen, sondern auch die schnelle und einfache Abtrennung bei möglichst geringer Störung des Verfahrensablaufes wichtig.

Es ist aus der Literatur bekannt, daß Polyolefine geeignet sind als Absorptionsmittel für die Aufnahme von Ölen auf Wasseroberflächen (US 3 770 627). In DE 43 20 908 ist ebenfalls für diesen Einsatz die Verwendung von Polyethylen beschrieben, welches die Aufnahme von Öl in einem Massenverhältnis von 1:3 ermöglicht. Dieses läßt sich noch verbessern durch Verwendung faserigen Polyethylens. Polypropylenpulver und -granulat ist ebenfalls als Absorptionsmittel für Kohlenwasserstoffe auf Wasseroberflächen beschrieben (JP 71 031 586, JP 56 005 176, EP 0 619 271). In FR 2 288 709 wird die Verwendung von pulverförmigem Polynorbornen für die Aufnahme petrochemischer Produkte auf festen und flüssigen Oberflächen beschrieben. Die Erfindung umfaßt die Homopolymere des [2.2.1]Bicyclohepten wie auch des 5-Methyl-[2.2.1]bicyclo-2-hepten, hergestellt durch ringöffnende Polymerisation.

Auf dieser Erfindung aufbauend wurden Mischungen von Homopolymeren des [2.2.1]Bicyclohepten wie auch des 5-Methyl-[2.2.1]bicyclo-2-hepten mit verschiedenen organischen und anorganischen Zusatz- bzw. Füllstoffen beschrieben, die die Aufnahme von Verunreinigungen, besonders Ölen vor allem in Gewässern erleichtern bzw. die Handhabbarkeit verbessern sollen (FR 0 383 640, FR 0 383 641, US 5 045 579).

In JP 03 122 188 wird die Herstellung von Saugfolien aus unvollständig ringöffnend polymerisiertem [2.2.1]Bicyclohepten und dessen Derivaten beschrieben. Diese Folien sind geeignet für die Aufnahme von Ölen auf Wasseroberflächen. In FR 2 645 047 wird das entsprechende Absorptionsmittel mit plastifizierenden Zusätzen und mineralischen Füllstoffen vermischt und zu einer Matte gepreßt. Die Anwendung von Absorptionsmitteln in Filtereinheiten für das Herausfiltern von Verunreinigungen aus Flüssigkeiten oder Hochdruckluft wird in JP 4 118 013 beschrieben. Verwendet wird ein pulver- oder perlenförmiges Polynorbornenharz, das schichtweise auf ein Filtertuch, z.B. Polyester aufgeklebt wird. Hieraus werden Filterkassetten aufgebaut, die aber nicht direkt wiederverwendbar sind.

Berücksichtigt man die für die vollständige Aufnahme von Verunreinigungen wie Ölen erforderliche Menge an Absorbens, die gehandhabt und im Anschluß an die Verwendung meist deponiert oder verbrannt wird, so ist es wünschenswert, eine möglichst hohe Aufnahmekapazität zu erreichen. Es ist außerdem wichtig, die Fähigkeit des Absorptionsmittels zu optimieren, Verunreinigungen unter Belastung, z.B. beim Aufnehmen von Oberflächen, beim Transportieren oder unter Druck dauerhaft zu absorbieren. Auf diese Eigenschaft wird in Literaturangaben selten und wenig detailliert eingegangen, sie besitzt aber entscheidenden Einfluß auf die Effizienz des Absorptionsmittels.

Neben dem eigentlichen Aufnahmevermögen von Verunreinigungen wie Ölen ist es für die praktische Bedeutung wichtig, daß das Absorptionsmittel für die Aufnahme von Verunreinigungen auf festen und flüssigen Oberflächen handhabbar ist, d.h. sich gut aufbringen läßt und nach dem Kontakt z.B. mit den Verunreinigungen ohne Schwierigkeiten aufgenommen werden kann. Während die Handhabung pulverförmiger Bindemittel auf festen Oberflächen in vielen Fällen unproblematisch ist, ist ihre Verwendung z.B. auf bewegter Wasseroberfläche schwierig. Durch die beschriebenen Vorschläge zur Lösung dieses Problems z.B. durch Verwendung von Folien wurde eine Verbesserung der Handhabbarkeit des Absorptionsmittels erreicht, allerdings ist auch hier die Absorptionskapazität noch zu verbessern.

Vom ökologischen Standpunkt aus ist zu berücksichtigen, daß die Verbrennung von Absorptionsmittelsystemen, die andere Atome als Kohlenstoff und Wasserstoff, z.B. Elemente der III., IV., V., VI. oder VII. Hauptgruppe enthalten, besonders Stickstoff, Phosphor, Sauerstoff, Schwefel, Fluor, Chlor, Brom, aufgrund der entstehenden Nebenprodukte wesentlich problematischer ist als im Falle der reinen Polyolefine.

Es bestand somit die Aufgabe, ein Absorptionsmittel zur Verfügung zu stellen, welches die Nachteile des Standes der Technik vermeidet.
Überraschenderweise wurde gefunden, daß Absorptionsmittel, die Cycloolefincopolymere enthalten, diese Aufgabe erfüllen.

Die vorliegende Erfindung bezieht sich auf eine Verwendung eines Cycloolefincopolymers als Absorptionsmittel, enthaltend mindestens ein Cycloolefincopolymer, welches polymerisierte Einheiten enthält, die sich von mindestens einem cyclischen, insbesondere polycyclischen Olefin und mindestens einem acyclischen Olefin ableiten.

Die vorliegende Erfindung bezieht auch sich auf eine Filtereinheit enthaltend ein Absorptionsmittel, welches 10 bis 100 Gew.-% mindestens eines Cycloolefincopolymers enthält.

Das Absorptionsmittel enthält 10-100 Gew.-%, bevorzugt 50-100 Gew.-%, besonders bevorzugt 90-100 Gew.-%, eines oder mehrerer Cycloolefincopolymere. Das erfindungsgemäße Absorptionsmittel kann auch im wesentlichen nur aus einem oder mehreren Cycloolefincopolymeren bestehen. Die polycyclischen Olefine weisen vorzugsweise 5 bis 50, insbesondere 5 bis 30 Kohlenstoffatome auf. Die acyclischen Olefine sind bevorzugt α-Olefine mit 2 bis 40 Kohlenstoffatomen.

Der Anteil der polymerisierten Einheiten, die sich ableiten von cyclischen, insbesondere polycyclischen Olefinen, beträgt 30-99 Gew.-%, besonders bevorzugt 60-99 Gew.-%, bezogen auf die Gesamtmasse des Cycloolefincopolymers. Der Anteil der polymerisierten Einheiten, die sich ableiten von acyclischen Olefinen beträgt 5-80 Gew.-%, besonders bevorzugt 10-60 Gew.-%, bezogen auf die Gesamtmasse des Cycloolefincopolymers, polymerisierte Einheiten enthält, die sich ableiten von mindestens einem acyclishen Olefin

Die Erfindung betrifft bevorzugt Absorptionsmittel, enthaltend mindestens ein Cycloolefincopolymer, welches 30-99 Gew.-%, besonders bevorzugt 60-99 Gew.-%, bezogen auf die Gesamtmasse des Cycloolefincopolymers, polymerisierte Einheiten enthält, welche sich ableiten von einem oder mehreren polycyclischen Olefinen der Formeln I, II, III, IV, V oder VI, 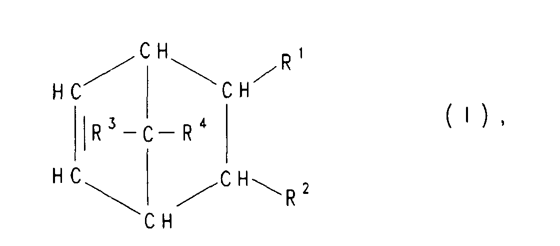 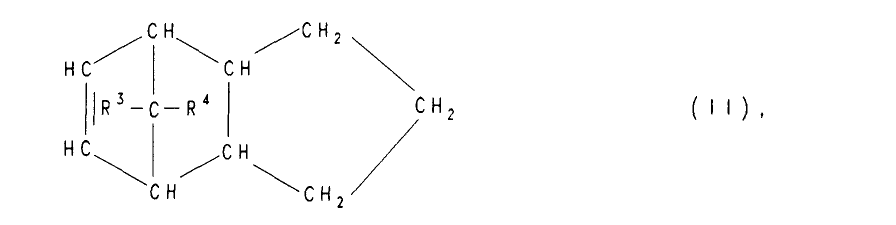 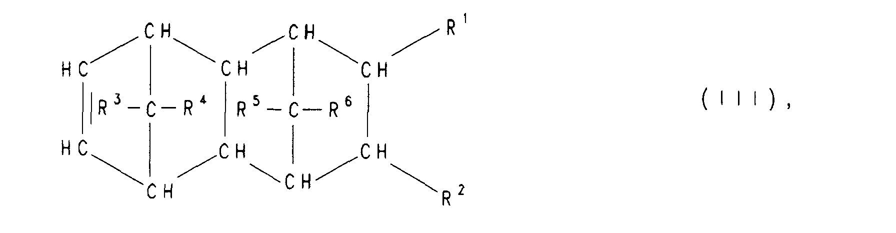 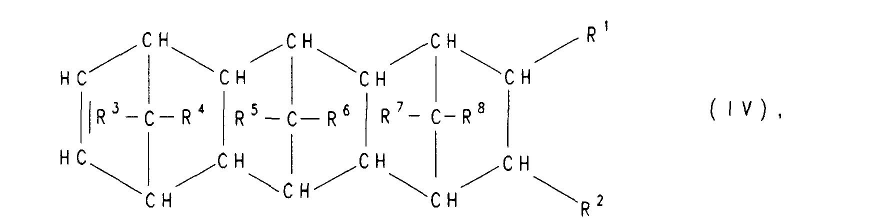 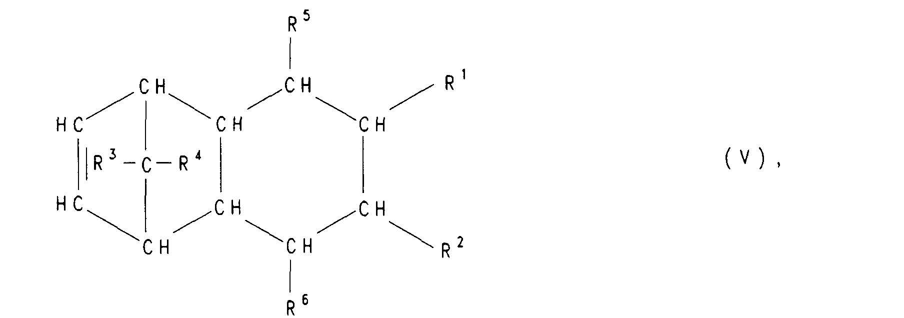 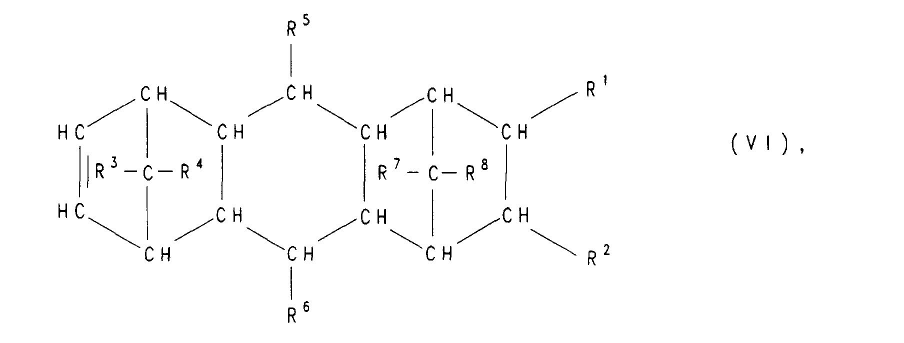 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest, einen cyclischen oder acyclischen C₂-C₂₀-Alkenylrest bedeuten, oder einen Ring bilden, wobei gleiche Reste R¹ bis R⁸ in den verschiedenen Formeln I bis VI eine unterschiedliche Bedeutung haben können, und
0,1 bis 99 Gew.-%, bezogen auf die Gesamtmasse des Cycloolefincopolymers, polymerisierte Einheiten, welche sich ableiten von einem oder mehreren acyclischen Olefinen der Formel VII 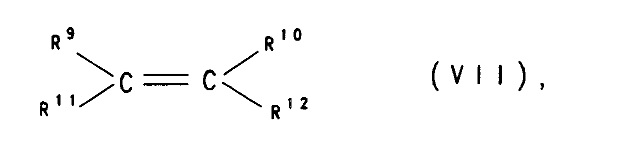 worin R⁹, R¹⁰, R¹¹ und R¹² gleich oder verschieden sind und ein Wasserstoffatom, oder einen C₁-C₂₀-Kohlenwasserstoffrest wie einen C₁-C₈-Alkylrest oder einen C₆-C₁₈-Arylrest bedeuten.

Außerdem kann das in dem erfindungsgemäßen Absorptionsmittel enthaltene Cycloolefincopolymer 0,1 bis 95 Gew.-%, bezogen auf die Gesamtmasse des Cycloolefincopolymers, polymerisierte Einheiten enthalten, welche sich ableiten von einem oder mehreren monocyclischen Olefinen der Formel VIII 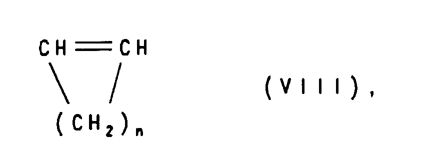 worin n eine Zahl von 2 bis 10 ist.

Bevorzugt bestehen die in dem Absorptionsmittel enthaltenen Cycloolefincopolymere aus polymerisierten Einheiten, die sich ableiten von einem oder mehreren polycyclischen Olefinen, insbesondere polycyclischen Olefinen der Formeln I oder III, und polymerisierten Einheiten, die sich ableiten von einem oder mehreren acyclischen Olefinen der Formel VII, insbesondere α-Olefinen mit 2-20 C-Atomen. Insbesondere sind Cycloolefincopolymere bevorzugt, die aus polymerisierten Einheiten bestehen, die sich ableiten von einem polycyclischen Olefin der Formel I oder III und einem acyclischen Olefin der Formel VII. Weiterhin bevorzugt sind Terpolymere, die aus polymerisierten Einheiten bestehen, die sich ableiten von einem polycyclischen Monoolefin der Formel I oder III, einem acyclischen Monoolefin der Formel VII und einem cyclischen oder acyclischen Olefin, welches mindestens zwei Doppelbindungen enthält (Polyen), insbesondere cyclische, bevorzugt polycyclische Diene wie Norbornadien oder cyclische, besonders bevorzugt polycyclische Alkene, die einen C₂-C₂₀-Alkenylrest tragen wie Vinylnorbornen.

Bevorzugt enthalten die in dem Absorptionsmittel enthaltenen Cycloolefincopolymere Olefine mit Norbornengrundstruktur, besonders bevorzugt Norbornen, Tetracyclododecen und gegebenenfalls Vinylnorbornen oder Norbornadien. Bevorzugt sind auch Cycloolefincopolymere, die polymerisierte Einheiten enthalten, die sich ableiten von acyclischen Olefinen mit endständigen Doppelbindungen wie α-Olefinen mit 2 bis 20 C-Atomen, besonders bevorzugt Ethylen oder Propylen. Besonders bevorzugt sind Norbornen/Ethylen- und Tetracyclododecen/Ethylen-Copolymere.

Bei den Terpolymeren sind besonders bevorzugt Norbornen/Vinylnorbonen/ Ethylen-, Norbornen/Norbornadien/Ethylen-, Tetracyclododecen/Vinylnorbonen/ Ethylen-, Tetracyclododecen/ Vinyltetracyclododecen/Ethylen-Terpolymere. Der Anteil der polymerisierten Einheiten, die sich ableiten von einem Polyen, bevorzugt Vinylnorbornen oder Norbornadien, liegt bei 0-50 Gew.-%, vorzugsweise bei 0-20 Gew.-%, der Anteil des acyclischen Monoolefins der Formel VII beträgt 0,1 bis 99 Gew.-%, bevorzugt 5-80 Gew.-%, besonders bevorzugt 10-60 Gew.-%, bezogen auf die Gesamtmasse des Cycloolefincopolymers. In den beschriebenen Terpolymeren liegt der Anteil des polycyclischen Monoolefins bei 0,1 bis 99 Gew.-%, bevorzugt 20-95 Gew.-%, besonders bevorzugt bei 40-90 Gew.-%, bezogen auf die Gesamtmasse des Cycloolefincopolymers.

Die Terpolymere, die aus polymerisierten Einheiten bestehen, die sich ableiten von einem polycyclischen Monoolefin, einem acyclischen Monoolefin und einem Polyen, können während der Polymerisationsreaktion oder aber im Anschluß an die Polymerisationsreaktion über die diolefinische Einheit vernetzt werden.

Die in dem Absorptionsmittel enthaltenen Cycloolefincopolymere können hergestellt werden bei Temperaturen von -78° bis 200°C und einem Druck von 0,01 bis 200 bar, in Gegenwart eines oder mehrerer Katalysatoren, welche mindestens eine Übergangsmetallverbindung und gegebenenfalls einen Cokatalysator enthalten. Als Übergangsmetallverbindungen eignen sich Metallocene, insbesondere stereorigide Metallocene, und Ziegler-Katalysatoren auf Titan- und Vanadiumbasis. Beispiele für Katalysatorsysteme, welche für die Herstellung der für die Zwecke der Erfindung geeigneten Cycloolefincopolymer geeignet sind, sind z.B. beschrieben in EP 203 799, EP 283 164, EP 407 870, EP 485 893, EP 503 422, DD 777 317, DD 231 070, auf die hiermit ausdrücklich Bezug genommen wird.

Beispiele für eingesetzte Übergangsmetallverbindungen sind:
rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis (1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
rac-Ethylen-1,2-bis-(1-indenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Bis(1-indenyl)-zirkondichlorid,
Diphenylmethylen-(9-fluorenyl)-cyclopentadienylzirkondichlorid,
lsopropylen-(9-fluorenyl)-cyclopentadienyl-zirkondichlorid,
Phenylmethylmethylen-(9-fluorenyl)-cyclopentadienyl-zirkondichlorid,
lsopropylen-(9-fluorenyl)-(1-(3-isopropyl)cyclopentadienyl)-zirkondichlorid,
lsopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)-zirkondichlorid,
Dimethylsilyl-(9-fluorenyl)(1-(3-methyl)-cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
lsopropylen-(9-fluorenyl)(1-(3-tert.-butyl)cyclopentadienyl)-zirkondichlorid,
lsopropylen-(cyclopentadienyl)-(1-indenyl)-zirkondichlorid,
Diphenylcarbonyl-(cyclopentadienyl)-(1-indenyl)-zirkondichlorid,
Dimethylsilyl-(cyclopentadienyl)-(1-indenyl)-zirkondichlorid,
lsopropylen-(methylcyclopentadienyl)-(1-indenyl)-zirkondichlorid,
4-(η⁵-cyclopentadienyl)-4,7,7-trimethyl-(η⁵-4,5,6,7-etrahydroindenyl-zirkondichlorid und analoge Hafnocene,
Titantetrachlorid, VOCl₃, VOCl₂(OCH₃), VOCl₂(OC₂H₅) und VOCl(OC₂H₅)₂.

Das erfindungsgemäße Absorptionsmittel zeigt besonders gute Absorptionseigenschaften, wenn die enthaltenen Cycloolefincopolymere eine Glastemperatur zwischen 50 und 300C, bevorzugt eine Glastemperatur zwischen 100 und 250C aufweisen. Die Glastemperaturen werden mittels DSC (Differential Scanning Calorimetry) bei einer Aufheizrate von 20°C/min bestimmt.

Die für die Zwecke der Erfindung besonders geeigneten Cycloolefincopolymere weisen Viskositätszahlen zwischen 50 und 300 cm³/g, insbesondere zwischen 60 und 200 cm³/g auf. Bestimmt werden die Viskositätszahlen in Dekalin bei 135 °C gemäß DIN 53 728.

Die erfindungsgemäßen Absorptionsmittel besitzen hervorragende Eigenschaften in bezug auf die Aufnahme und dauerhafte Bindung von Verunreinigungen. Die Verunreinigungen umfassen organische Verbindungen wie Öle, d.h. wasserunlösliche, bei Raumtemperatur flüssige organische Verbindungen mit relativ niedrigem Dampfdruck. Beispiel hierfür sind Mineralöle aus Erdöl, vollsynthetische Öle wie Silikonöle, pflanzliche und tierische Öle wie Triglyzeride mittlerer oder ungesättigter Fettsäuren, etherische Öle wie duftende, flüchtige Öle und Riechstoffe aus Pflanzen. Die Mineralöle umfassen Kohlenwasserstoffe mit 1 bis 100 Kohlenstoffatomen wie verzweigte oder unverzweigte Alkane mit 1 bis 40 Kohlenstoffatomen und Cycloalkane mit 5 bis 50 Kohlenstoffatomen, die jeweils C₁-C₁₀₀-Kohlenwasserstoffsubstituenten tragen können, verzweigte und unverzweigte Alkene mit 1 bis 40 Kohlenstoffatomen und Aromaten mit 6 bis 50 Kohlenstoffatomen, die jeweils C₁-C₁₀₀-Kohlenwasserstoffsubstituenten tragen können. Die Verunreinigungen wie Öle können andere Atome als Kohlenstoff und Wasserstoff enthalten, besonders Sauerstoff, Schwefel und Stickstoff. Ebenfalls zu den Verunreinigungen gehören substituierte Derivate der genannten Kohlenwasserstoffe, wobei die Substituenten andere Atome als Kohlenstoff und Wasserstoff enthalten können, z.B. Elemente der III., IV., V., VI. oder VII. Hauptgruppe des Periodensystems der Elemente, besonders Stickstoff, Phosphor, Sauerstoff, Schwefel, Fluor, Chlor, Brom.

Das in dem erfindungsgemäßen Absorptionsmittel enthaltene Cycloolefincopolymer kann verschiedene Morphologien aufweisen. Durch Wahl geeigneter Aufarbeitungsschritte und Aufarbeitungsbedingungen können z.B. sehr feine flockige oder faserige Materialien des Cycloolefincopolymers erhalten werden, die sich durch eine hohe Oberfläche und geringe Schüttdichte von weniger als 300 g/l, bevorzugt 5 bis 150 g/l, besonders bevorzugt 5 bis 50 g/l auszeichnen. Solche Absorptionsmittel zeigen eine sehr gute Benetzbarkeit durch Verunreinigungen und hervorragende Absorptionseigenschaften.

Auch die Herstellung größerer, z.B. perlenförmiger Partikel des Cycloolefincopolymers ist unter geeigneten Aufarbeitungsbedingungen möglich. Um eine möglichst große Oberfläche zu erzielen, können auch poröse Partikel hergestellt werden.

Die Aufarbeitung des Cycloolefincopolymers kann direkt aus der Polymerisationslösung oder aus der Lösung vorher isolierten Cycloolefincopolymerpulvers oder -granulats erfolgen. Bevorzugt wird das Cycloolefincopolymer erhalten durch Fällung des gelösten Cycloolefincopolymers in einem Fällungsmittel oder durch Verdampfen des Lösungsmittels. Besonders bevorzugt werden Lösungen, die das jeweilige Cycloolefincopolymer enthalten, in ein Fällungsmittel oder einen Gasraum versprüht oder in das Fällungsmittel eingetropft. Durch Wahl geeigneter Aufarbeitungsbedingungen können Cycloolefincopolymere unterschiedlicher Struktur und Schüttdichte erhalten werden oder aber größere Perlen unterschiedlicher Porositäten.

Die Porosität kann außerdem beeinflußt werden durch Zusatz von Verbindungen, die durch physikalische Wechselwirkungen oder aber chemisch an das Cycloolefincopolymer gebunden sind und in dem Fällungsmittel schlecht oder nicht löslich sind. Werden diese Zusätze anschließend aus dem Cycloolefincopolymeren herausgelöst, z.B. durch Zugabe eines Lösungsmittels, in dem das Cycloolefincopolymer jedoch unlöslich ist, so können zusätzliche oder größere Poren im Polymer erzeugt werden. Bevorzugt werden Partikel mit einem mittleren Durchmesser von 0,5 bis 5 mm hergestellt.

Außerdem können größere poröse Partikel von Cycloolefincopolymeren durch Agglomeration erhalten werden. Bevorzugt enthält das erfindungsgemäße Absorptionsmittel ein pulver- bzw. flockenförmiges Cycloolefincopolymer geringer Schüttdichte. Das Cycloolefincopolymer kann mit einem niedrigsiedenden schlechten Lösungsmittel leicht angequollen und z.B. durch Rotation in einem Taumelmischer agglomeriert werden. Das Quellmittel kann durch leichtes Erwärmen bzw. unter Vakuum verdampft und durch Kondensation zurückgewonnen werden.

Bevorzugt werden Partikel mit einer Korngröße von 0,5 bis 5 mm hergestellt.

Als spezielle Anwendungsform des Absorptionsmittels können ausgehend von gelöstem oder ungelöstem Absorptionsmittel, das das jeweilige Cycloolefincopolymer enthält, bevorzugt solches, das durch Fällung, Sprühfällung oder Sprühtrocknung hergestellt wurde, zusammenhängende Absorptionsmittelsysteme wie z.B. Matten hergestellt werden. Bevorzugt sind solche Absorptionsmittelsysteme, die aufgrund einer porösen Struktur eine große Oberfläche aufweisen, d.h. die große Oberfläche des gefällten Polymers erhalten bleibt. Für eine Erhöhung der mechanischen Stabilität können diese Absorptionsmittelsysteme auf einen Träger z.B. aus Cycloolefincopolymer oder aus Kautschuk aufgebracht werden.

Eine weitere spezielle Anwendungsform des Absorptionsmittels ist die Herstellung dünner poröser Schichten. Hierbei kann ausgehend von einer Lösung des in dem erfindungsgemäßen Absorptionsmittel enthaltenen Cycloolefincopolymers z.B. durch Ausbreiten der Lösung zu einem dünnen Film und anschließende Fällung durch Verdampfen des Lösungsmittels oder aber in einem Fällungsmittel eine dünne poröse Schicht erzeugt werden, die aufgrund ihrer großen Oberfläche gute Absorptionseigenschaften zeigt. Diese poröse Schicht kann noch mit geeigneten Materialien beschichtet werden und zur Erhöhung der mechanischen Stabilität auf einen Träger z.B. aus Cycloolefincopolymer oder aus Kautschuk aufgebracht werden.

Die Verwendung größerer, z.B. pulverförmiger Partikel des Absorptionsmittels oder die Verwendung von Absorptionsmittelsystemen wie Matten und porösen Schichten erleichtert die Handhabbarkeit des Absorptionsmittels auf Oberflächen, besonders auf bewegten wäßrigen Oberflächen.

Darüberhinaus kann das erfindungsgemäße Absorptionsmittel für die Entfernung von Verunreinigungen aus vorbei- oder hindurchströmenden Flüssigkeiten und Gasen z.B. im Rahmen eines technischen Prozesses verwendet werden. Das erfindungsgemäße Absorptionsmittel kann hierfür z.B. in eine Filtereinheit eingebracht werden, um so in einem einfachen Verfahrensschritt die diskontinuierliche oder kontinuierliche Abtrennung von Verunreinigungen wie Ölen zu gewährleisten. Bevorzugt werden größere Partikel des Cycloolefincopolymers mit einem mittleren Durchmesser von 0,5 bis 5 mm verwendet. Diese werden bevorzugt in Form einer lockeren Schüttung z.B. in einem zylindrischen, möglicherweise transparenten Behältnis eingesetzt für die Reinigung von durchströmenden Flüssigkeiten und Gasen.

Ebenfalls können poröse Schichten von Cycloolefincopolymeren für die Entfernung von Verunreinigungen aus vorbei- oder hindurchströmenden Flüssigkeiten und Gasen z.B. im Rahmen eines Prozesses verwendet werden. Für die Reinigung von durchströmenden Flüssigkeiten und Gasen sind dünne poröse Schichten bevorzugt, besonders solche mit einer Schichtdicke von weniger als 2 mm. Diese Systeme können als Absorptionsmittel z.B. in eine Filtereinheit eingebracht werden, um so in einem einfachen Verfahrensschritt die diskontinuierliche oder kontinuierliche Abtrennung von Verunreinigungen wie z.B. Ölen zu gewährleisten. Bevorzugt werden eine oder aber mehrere dünne poröse Schichten verwendet und z.B. in einem zylindrischen, möglicherweise transparenten Behältnis eingesetzt. Die Schichten können z.B. mechanisch befestigt werden oder zur Befestigung und gleichzeitigen Erhöhung der mechanischen Stabilität auf einen Träger, bevorzugt einen grobmaschiges System z.B. aus Metall, Polymer, synthetischen oder natürlichen Fasern aufgebracht werden.

Das in dem erfindungsgemäßen Absorptionsmittel enthaltene Cycloolefincopolymer kann in unterschiedlicher Struktur und Schüttdichte z.B. als Flocken oder Perlen hergestellt werden durch langsames Eintropfen einer Lösung, die 0,1 bis 30 Gew.-% des Polymers in einem Lösungsmittel enthält, mit einer Geschwindigkeit von 0,001 bis 100 l/h unter Rühren in ein Fällungsmittel. Lösungsmittel sind z.B. Aromaten und substituierte Aromaten wie Benzol, Toluol, Xylol, aliphatische und cyclische Kohlenwasserstoffe und deren substituierte Derivate wie Hexan, Cyclohexan, Cyclopentan, wobei die Substituenten andere Atome als Kohlenstoff und Wasserstoff enthalten können, z.B. Elemente der III., IV., V., VI. oder VII. Hauptgruppe, besonders Stickstoff, Phosphor, Sauerstoff, Schwefel, Fluor, Chlor, Brom, und Gemische dieser Lösungsmittel. Als Lösungsmittel werden vorzugsweise verwendet: Toluol, Hexan, Cyclohexan, Cyclopentan. Bevorzugte Fällungsmittel sind polare Medien wie Wasser, Aceton oder niedere Alkohole wie Methanol, Ethanol oder Gemische dieser Fällungsmittel. Die Temperatur der Lösung wie auch des Fällungsmittels liegt in einem Bereich von 10 bis 100 °C, im Falle der Lösung vorzugsweise bei 10 bis 30 °C. Aceton, Methanol und Ethanol und ihre Mischungen werden als Fällungsmittel ebenfalls vorzugsweise bei 10 bis 30 °C verwendet, und zwar in einem Verhältnis von Volumen des Lösungsmittels zu Volumen des Fällmittels von ca. 1:1 bis 1:20. Wasser wird als Fällungsmittel vorzugsweise bei 85 bis 100 °C, besonders bevorzugt bei 92 bis 98 °C verwendet, um leichtsiedende Lösungsmittel, z.B. Hexan, Cyclohexan, Cyclopentan, direkt und höhersiedende Lösungsmittel, z.B. Toluol, azeotrop abzudestillieren. Das Verhältnis von Volumen des Lösungsmittels zu Volumen des Fällmittels liegt hier bei ca. 1:5 bis 1:20. Das verdampfte Lösungsmittel wird kondensiert und z.B. in einem Wasserabscheider von ebenfalls abdestilliertem und kondensiertem Wasser getrennt und so wiedergewonnen. Das gesamte Verfahren läßt sich sowohl diskontinuierlich als auch kontinuierlich durchführen.

Die Einstellung der Teilchengröße der Flocken bzw. der Perlen und damit auch der Oberfläche kann durch die Eintropfgeschwindigkeit und Rührgeschwindigkeit, die bei 10 bis 3000 U/min liegt, beeinflußt werden. Auf diese Weise wurden pulver- und flockenförmige Polymere oder auch faserige Polymere mit Schüttdichten zwischen 5 und 300 g/l bzw. perlenförmige Partikel mit einem mittleren Durchmesser von 0,5 bis 5 mm hergestellt.

Das in dem erfindungsgemäßen Absorptionsmittel enthaltene Cycloolefincopolymer kann ebenfalls hergestellt werden durch Einsprühen von 0,01 bis 100 l/h einer Lösung, die 0,1 bis 30 Gew.-% des Polymers in einem Lösungsmittel enthält, in ein Fällungsmittel. Lösungsmittel sind z.B. Aromaten und substituierte Aromaten wie Benzol, Toluol oder Xylol, aliphatische und cyclische Kohlenwasserstoffe und deren substituierte Derivate wie Hexan, Cyclohexan oder Cyclopentan, wobei die Substituenten andere Atome als Kohlenstoff und Wasserstoff enthalten können, z.B. Elemente der III., IV., V., VI. oder VII. Hauptgruppe, besonders Stickstoff, Phosphor, Sauerstoff, Schwefel, Fluor, Chlor, Brom, und Gemische dieser Lösungsmittel. Als Lösungsmittel werden vorzugsweise verwendet: Toluol, Hexan, Cyclohexan, Cyclopentan. Bevorzugte Fällungsmittel sind polare Medien wie Wasser, Aceton oder niedere Alkohole wie Methanol, Ethanol oder Gemische dieser Fällungsmittel. Die Temperatur der Lösung wie auch des Fällungsmittels liegt in einem Bereich von 10 bis 100 °C, im Falle der Lösung vorzugsweise bei 10 bis 30 °C. Aceton, Methanol und Ethanol und ihre Mischungen werden als Fällmittel ebenfalls vorzugsweise bei 10 bis 30 °C verwendet, und zwar in einem Verhältnis von Volumen des Lösungsmittels zu Volumen des Fällmittels von ca. 1:1 bis 1:50. Wasser wird als Fällmittel vorzugsweise bei 85 bis 100 °C, am besten bei 92 bis 98C verwendet, um leichtsiedende Lösungsmittel, z.B. Hexan, Cyclohexan, Cyclopentan, direkt und höhersiedende Lösungsmittel, z.B. Toluol, azeotrop abzudestillieren. Das Verhältnis von Volumen des Lösungsmittels zu Volumen des Fällmittels liegt bei ca. 1:1 bis 1:50. Das verdampfte Lösungsmittel wird kondensiert und z.B. in einem Wasserabscheider von ebenfalls abdestilliertem und kondensiertem Wasser getrennt und so wiedergewonnen. Das gesamte Verfahren läßt sich sowohl diskontinuierlich als auch kontinuierlich durchführen.
Eine Einstellung der Teilchengröße der Flocken bzw. der Perlen und damit auch der Oberfläche wird durch die unterschiedliche Einsprühgeschwindigkeit beeinflußt. Während des Einsprühens ist es erforderlich, die Flüssigkeit stark zu rühren oder durch Einleiten von fein verteiltem Inertgas, z.B. Stickstoff, Argon, in starker Bewegung zu halten. Auf diese Weise wird ein Verkleben von ausfallenden Partikeln mehr oder weniger verhindert und die Teilchengröße des Materials beeinflußt. Es wurden pulver- und flockenförmige Polymere oder auch faserige Polymere mit Schüttdichten zwischen 5 und 300 g/l bzw. perlenförmige Partikel mit einem mittleren Durchmesser von 0,5 bis 5 mm hergestellt.
Das in dem erfindungsgemäßen Absorptionsmittel erhaltene Cycloolefincopolymer kann in unterschiedlicher Struktur und Schüttdichte ebenfalls hergestellt werden durch Einsprühen von 0,01 bis 100 l/h einer Lösung, die 0,1 bis 30 Gew.-% des Polymers in einem Lösungsmittel enthält, in einen beheizten Raum, gefüllt mit einem Gas, vorzugsweise mit einem Inertgas, besonders Stickstoff, Argon. Lösungsmittel sind z.B. Aromaten und substituierte Aromaten wie Benzol, Toluol, Xylol, aliphatische und cyclische Kohlenwasserstoffe und deren substituierte Derivate wie Hexan, Cyclohexan, Cyclopentan, wobei die Substituenten andere Atome als Kohlenstoff und Wasserstoff enthalten können, z.B. Elemente der III., IV., V., VI. oder VII. Hauptgruppe, besonders Stickstoff, Phosphor, Sauerstoff, Schwefel, Fluor, Chlor, Brom, und Gemische dieser Lösungsmittel. Als Lösungsmittel werden vorzugsweise niedrigsiedende Flüssigkeiten verwendet, z.B. Hexan, Cyclohexan, Cyclopentan. Durch Beheizung des Gasraumes auf eine konstante Temperatur, die im Bereich von 40 bis 300 °C liegen kann, vorzugsweise bei 40 bis 150 °C, besonders bevorzugt bei 60 bis 120 °C, wird das Lösungsmittel in kurzer Zeit verdampft. Ein kontinuierlicher Gasstrom sorgt für eine starke Bewegung des ausfallenden Polymers und verhindert so ein Verkleben während des Verdampfens des Lösungsmittels. Außerdem wird hierdurch der Lösungsmitteldampf aus dem Gasraum entfernt und kann kondensiert und wiederverwendet werden. Das gesamte Verfahren läßt sich sowohl diskontinuierlich als auch kontinuierlich durchführen.

Eine Einstellung der Teilchengröße der Flocken bzw. der Perlen und damit auch der Oberfläche wird durch die unterschiedliche Einsprühgeschwindigkeit beeinflußt. Während des Einsprühens ist es erforderlich, das ausfallende Polymer durch das Einleiten von fein verteiltem Inertgas, z.B. Stickstoff, Argon, in starker Bewegung zu halten. Auf diese Weise wird ein Verkleben von ausfallenden Partikeln mehr oder weniger verhindert und die Teilchengröße des Materials beeinflußt. Auf diese Weise wurden pulver- und flockenförmige Polymere, oder auch faserige Polymere, erhalten mit Schüttdichten zwischen 5 und 300 g/l bzw. perlenförmige Partikel mit einer Korngröße von 0,5 bis 5 mm hergestellt.

Für die Agglomeration des Absorptionsmittels wurde das erhaltene Cycloolefincopolymer in Form festen Materials, besonders Materials geringer Schüttdichte, das bevorzugt durch Fällung, Sprühfällung oder Sprühtrocknung hergestellt wurde, eingesetzt. Dieses kann durch geringe Mengen eines Lösungsmittels, bevorzugt eines schlechten Lösungsmittels angelöst bzw. angequollen werden. Lösungsmittel sind z.B. Aromaten und substituierte Aromaten wie Benzol, Toluol, Xylol, aliphatische und cyclische Kohlenwasserstoffe und deren substituierte Derivate wie Hexan, Cyclohexan, Cyclopentan, wobei die Substituenten andere Atome als Kohlenstoff und Wasserstoff enthalten können, z.B. Elemente der III., IV., V., VI. oder VII. Hauptgruppe, besonders Stickstoff, Phosphor, Sauerstoff, Schwefel, Fluor, Chlor, Brom, und Gemische dieser Lösungsmittel. Besonders geeignet sind niedrigsiedende Lösungsmittel, bevorzugt mit einem Siedepunkt unterhalb von 100 °C. Die Agglomeration des Absorptionsmittels, das angelöstes bzw. angeqollenes Polymer enthält, erfolgt z.B. durch Rotation z.B. in einem flachen, runden Gefäß. Das Quellmittel kann durch leichtes Erwärmen bzw. unter Vakuum verdampft und durch Kondensation zurückgewonnen werden. Dabei werden Partikel des Absorptionsmittels erhalten, die nach Verdampfen des Quellmittels eine stabile poröse Struktur aufweisen. Es werden mittlere Durchmesser der Partikel von 0,5 bis 15 mm erreicht, bevorzugt sind Partikel mit einem mittleren Durchmesser von 0,5 bis 5 mm.

Ausgehend von gelöstem oder ungelöstem Cycloolefincopolymer können zusammenhängende Absorptionsmittelsysteme wie Matten hergestellt werden. Bevorzugt sind solche Systeme, in denen aufgrund einer porösen Struktur eine große Oberfläche erhalten wird bzw. die große Oberfläche des gefällten Polymers erhalten bleibt. Für die Herstellung zusammenhängender Systeme können verschiedene kontinuierliche und diskontinuierliche Methoden verwendet werden. Bevorzugt wird festes Material, besonders bevorzugt solches, das pulver- und flockenförmiges Cycloolefincopolymer enthält, welches durch Fällung, Sprühfällung oder Sprühtrocknung erhalten werden kann, durch Pressen bei verschiedenen Drücken und Temperaturen in die gewünschte Anwendungsform gebracht. Es werden Drücke von 2 bis 50 bar und Temperaturen von 20 bis 200 °C verwendet, bevorzugt sind Bedingungen von 5 bis 30 bar und Temperaturen, die ca. 20 °C unterhalb der Glasübergangstemperatur des jeweiligen Cycloolefincopolymer liegen. Aufgrund dieser Bedingungen und durch Verwendung von Pressen, die keine glatte Oberfläche besitzen, sondern bei denen vorzugsweise eine oder beide Oberflächen aus unebenem, z.B. rauhem oder gitterförmigem Material bestehen, können Absorptionsmittelsysteme wie Matten erhalten werden, die eine große Oberfläche besitzen bzw. bei denen die große Oberfläche des erhaltenen pulveroder flockenförmigen Cycloolefincopolymer erhalten bleibt. Die Dicke dieser Absorptionsmittelsysteme liegt zwischen 0,1 und 15 cm, vorzugsweise zwischen 1 und 10 cm. Für eine Erhöhung der mechanischen Stabilität können sie auf einen Träger z.B. aus Cycloolefincopolymer oder aus Kautschuk aufgebracht werden.

Entsprechende zusammenhängende Absorptionsmittelsysteme können auch hergestellt werden, indem festes Material, bevorzugt solches, das pulver- und flockenförmiges Cycloolefincopolymer enthält, welches durch Fällung, Sprühfällung oder Sprühtrocknung erhalten werden kann, durch geringe Mengen eines Lösungsmittels, bevorzugt eines schlechten Lösungsmittels angelöst bzw. angequollen wird. Lösungsmittel sind z.B. Aromaten und substituierte Aromaten wie Benzol, Toluol, Xylol, aliphatische und cyclische Kohlenwasserstoffe und deren substituierte Derivate wie Hexan, Cyclohexan, Cyclopentan, wobei die Substituenten andere Atome als Kohlenstoff und Wasserstoff enthalten können, z.B. Elemente der III., IV., V., VI. oder VII. Hauptgruppe, besonders Stickstoff, Phosphor, Sauerstoff, Schwefel, Fluor, Chlor, Brom, und Gemische dieser Lösungsmittel. Besonders geeignet sind niedrigsiedende Lösungsmittel, bevorzugt mit einem Siedepunkt unterhalb von 100 °C. Das angequollene oder angelöste Absorptionsmittel wird in einem kontinuierlichen oder diskontinuierlichen Verfahren durch Pressen bei verschiedenen Drücken und Temperaturen in die gewünschte Anwendungsform gebracht. Es wurden Drücke von 2 bis 50 bar und Temperaturen von 20 bis 200 °C verwendet, bevorzugt sind Bedingungen von 5 bis 30 bar und Temperaturen zwischen 20 und 80 °C, besonders bevorzugt zwischen 20 und 50 °C. Aufgrund dieser Bedingungen und durch Verwendung von Pressen, die keine glatte Oberfläche besitzen, sondern bei denen vorzugsweise eine oder beide Oberflächen aus unebenem, z.B. rauhem oder gitterförmigem Material bestehen, können Absorptionsmittelsysteme wie Matten erhalten werden, die eine große Oberfläche besitzen bzw. bei denen die große Oberfläche des eingesetzten pulveroder flockenförmigen Cycloolefincopolymer erhalten bleibt. Das Quellmittel kann während des Preßvorganges oder aber danach durch Temperaturen, die oberhalb der Siedetemperatur des Quellmittels liegen, verdampft werden, der Verdampfungsvorgang kann unterstützt werden durch Anlegen eines Vakuums. Auf diese Weise kann eine noch größere Oberfläche der Systeme erhalten werden. Die Dicke dieser Absorptionsmittelsysteme liegt zwischen 0,1 und 15 cm, vorzugsweise zwischen 1 und 10 cm. Für eine Erhöhung der mechanischen Stabilität können sie auf einen Träger z.B. ebenfalls aus Cycloolefincopolymer oder aus Kautschuk aufgebracht werden.

Dünne Schichten des erfindungsgemäßen Absorptionsmittels, bevorzugt dünne poröse Schichten, die besonders für die Entfernung von Verunreinigungen aus durchströmenden Flüssigkeiten und Gasen z.B. im Rahmen eines Prozesses verwendet werden können, d.h. solche mit einer Schichtdicke von weniger als 5 mm, besonders solche mit einer Schichtdicke von weniger als 2 mm können durch Aufbringen einer dünnen Schicht einer Lösung des in dem erfindungsgemäßen Absorptionsmittel enthaltenen Cycloolefincopolymers auf eine Oberfläche in einem kontinuierlichen oder einem diskontinuierliche Verfahren erzeugt werden. Dabei kann das Lösungsmittel durch höhere Temperatur, Vakuum oder eine Kombination von höherer Temperatur und Vakuum verdampft werden. Bevorzugt ist die Aufbringung einer dünnen Schicht einer Polymerlösung auf die Oberfläche eines Fällungsmittels in einem kontinuierlichen oder einem diskontinuierlichen Verfahren. Lösungsmittel sind z.B. Aromaten und substituierte Aromaten wie Benzol, Toluol, Xylol, aliphatische und cyclische Kohlenwasserstoffe und deren substituierte Derivate wie Hexan, Cyclohexan, Cyclopentan, wobei die Substituenten andere Atome als Kohlenstoff und Wasserstoff enthalten können, z.B. Elemente der III., IV., V., VI. oder VII. Hauptgruppe, besonders Stickstoff, Phosphor, Sauerstoff, Schwefel, Fluor, Chlor, Brom, und Gemische dieser Lösungsmittel. Bevorzugte Lösungsmittel sind hier Toluol, Hexan, Cyclohexan, Cyclopentan und Tetrahydrofuran. Bevorzugte Fällungsmittel sind polare Verbindungen wie Wasser, Aceton, und niedere Alkohole wie Methanol, Ethanol oder Gemische dieser Fällungsmittel. Die Temperatur der Lösung wie auch des Fällungsmittels liegt in einem Bereich von 10 bis 100 °C, bevorzugt zwischen 20 und 90 °C. Dabei liegt die Temperatur der Lösung wie auch des Fällungsmittels unterhalb der Siedepunkte von Lösungs- und Fällungsmittel.

Die bevorzugt dünnen und porösen Schichten können als Filter geringer Schichtdicke selbsttragend eingesetzt oder auch zur Erhöhung der mechanischen Stabilität auf einen Träger aufgebracht werden oder aber mit einem geeigneten Material beschichtet werden. Außerdem ist der Aufbau einer größeren Filtereinheit z.B. durch eine Vielzahl poröser Schichten möglich. Bevorzugt werden eine oder mehrere dünne poröse Schichten verwendet und z.B. in einem zylindrischen, möglicherweise transparenten Behältnis eingesetzt. Die Schichten können z.B. mechanisch befestigt werden oder zur Befestigung und gleichzeitigen Erhöhung der mechanischen Stabilität auf einen Träger, bevorzugt einen grobmaschiges System z.B. aus Metall, Polymer, synthetischen oder natürlichen Fasern aufgebracht werden.

Das erfindungsgemäße Absorptionsmittel zeichnet sich vorteilhaft aus durch eine hohe Kapazität bei der Aufnahme von verschiedenen Verunreinigungen. Es konnte gezeigt werden, daß die hervorragenden Absorptionseigenschaften auch unter Belastung, z.B. bei Unterdruck bestehen. Ein weiterer Vorteil liegt in der vielseitigen Verwendbarkeit des erfindungsgemäßen Absorptionsmittels, das für die Aufnahme von Verunreinigungen von festen oder flüssigen Oberflächen, aber auch für die Entfernung von Verunreinigungen aus strömenden Flüssigkeiten und Gasen z.B. im Rahmen eines Verfahrensschrittes geeignet ist.

Die vielseitige Verwendbarkeit des erfindungsgemäßen Absorptionsmittels wird darin deutlich, daß auch größere zusammenhängende Systeme wie auch poröse Materialien herstellbar sind, ohne daß die hervorragenden Eigenschaften des Pulvers verlorengehen.

Ein ökologischer Vorteil ist, daß das in dem erfindungsgemäßen Absorptionsmittel enthaltene Cycloolefincopolymer hinsichtlich Deponierung wie auch Verbrennung unproblematisch ist. Darüber hinaus ist eine Wiederverwendung des Absorptionsmittels z.B. durch einfache Extraktion der Verunreinigungen und nachfolgende Trocknung möglich.

Die nachfolgenden Beispiele sollen die vorliegende Erfindung illustrieren. Die Abkürzung ABM bedeutet dabei Absorptionsmittel. In allen Beispielen besteht das Absorptionsmittel aus einem Ethylen-Norbornen-Copolymeren.

### Beispiel 1

Die Lösung eines Cycloolefincopolymers in Toluol wird bei Raumtemperatur in das Fällungsmittel Aceton im Verhältnis von ca. 1:10 eingegossen und ca. 5 min bei hoher Geschwindigkeit gerührt. Die Konzentration der Lösung beträgt 8 Gew.-%. Nach Filtration des Fällproduktes unter Vakuum (200 mbar) wird bei 80 °C im Vakuum getrocknet. Es wird Cycloolefincopolymer von lockerer, watteartiger Konsistenz erhalten. 1 g des erhaltenen Cycloolefincopolymers wurde mit 10 g des Maschinenöls ®Nuto H 46 der Firma Esso versetzt und die Ölaufnahme bestimmt. Beispiel 1 wurde mit insgesamt vier verschiedenen Cycloolefincopolymeren durchgeführt. Die Ergebnisse sind in Tabelle 1 angegeben.

**Tabelle 1**

| Bsp. | Probe | Tg °C | Tm °C | VZ ml/g | Schüttdichte g/l | Ölaufnahme g Öl/g ABM |
|---|---|---|---|---|---|---|
| 1a | COC 1 | 121 | 265 | 165 | 22 | >10:1 |
| 1b | COC 2 | 118 | 268 | 161 | 22 | >10:1 |
| 1c | COC 3 | 127 | 272 | 134 | - | 8:1 |
| 1d | COC 4 | 127 | 276 | 95 | 30 | 8:1 |

### Beispiel 2

Die Lösung eines Cycloolefincopolymers in Cyclohexan wird in das Fällungsmittel Wasser im Verhältnis von 1:10 unter starkem Rühren (ca. 800 U/min) mit einer Geschwindigkeit von ca. 0,1 l/h eingetropft. Verwendet werden ein Wendelrührer (W) bzw. ein Propellerrührer (P). Die Temperatur des Fällungsmittels liegt bei ca. 96C, die Polymerlösung weist Raumtemperatur auf. Das Lösungsmittel wird während der Fällung kontinuierlich abdestilliert. Nach Filtration des Fällproduktes unter Vakuum (200 mbar) wird bei 70 bis 80 °C im Vakuum getrocknet. Nach der Trocknung wurde 1 g des Cycloolefincopolymers mit 10 g des Maschinenöls ®Nuto H 46 der Firma Esso versetzt und die Ölaufnahme bestimmt.

Beispiel 2 wurde mit insgesamt drei verschiedenen Cycloolefincopolymeren durchgeführt. Die Ergebnisse sind in Tabelle 2 angegeben.

**Tabelle 2**

| Bsp. | Probe | Konzentration Polymerlösung Gew.-% | Tg °C | VZ ml/g | Ölaufnahme g Öl/g ABM | Konsistenz des ABM |
|---|---|---|---|---|---|---|
| 2a | COC 5 (W) | 8 | 148 | 66 | 10:1 | feinflockig, z. T. faserig |
| 2b | COC 5 (P) | 8 | 148 | 66 | 10:1 | feinflockig, z. T. faserig |
| 2c | COC 6 (W) | 4 | 149 | 126 | 8:1 | feinflockig, z. T. faserig |

### Beispiel 3

Die Lösung eines Cycloolefincopolymers in Toluol wird in das Fällungsmittel Wasser im Verhältnis von ca. 1:10 mit einer Geschwindigkeit von ca. 2 l/h fein verteilt eingesprüht. Die Temperatur des Fällungsmittels liegt bei ca. 96C, die Polymerlösung weist Raumtemperatur auf. Eine starke Durchmischung wird durch Einblasen von Stickstoff erreicht. Nach Filtration des Fällproduktes wird bei 70 bis 80 °C im Vakuum getrocknet. Nach der Trocknung wurde 1 g des Cycloolefincopolymer mit 10 g des Maschinenöls ®Nuto H 46 der Firma Esso bzw. mit 10 g Altöl versetzt und die Ölaufnahme bestimmt. Beispiel 3 wurde mit insgesamt fünf verschiedenen Cycloolefincopolymeren durchgeführt. Die Ergebnisse sind in Tabelle 3 angegeben.

**Tabelle 3**

| Bsp. | Probe | Konzentration Polymerlösung Gew.-% | Tg °C | VZ ml/g | Ölaufnahme g Öl/g ABM | |
|---|---|---|---|---|---|---|
| | | | | | Maschinenöl | Altöl |
| 3a | COC 5 | 8 | 148 | 66 | 10:1 | 10:1 |
| 3b | COC 6 | 4 | 149 | 126 | 12:1 | 12:1 |
| 3c | COC 7 | 8 | 148 | 63 | 10:1 | 10:1 |
| 3d | COC 8 | 8 | 149 | 85 | 12:1 | 12:1 |
| 3e | COC 9 | 2.5 | 150 | 197 | 12:1 | 12:1 |

### Beispiel 4

Durchführung des Verfahrens zur Bestimmung der Aufnahmekapazität 1 g eines Cycloolefincopolymers (Einwaage (EW) COC) wird mit 15 g bzw. 20 g Öl (Einwaage (EW) ÖL) versetzt, verrührt und 5 Minuten stehen gelassen. Dann wird über eine Drucknutsche bei ca. 200 mbar abfiltriert und das Filtrat [Restöl] ebenso wie der Filtrationsrückstand (Auswaage (AW) Masse) ausgewogen. Differenzen zwischen der Gesamteinwaage und der Auswaage an Restöl und Summe aus gebundenem Öl und COC sind durch Verluste bei der Überführung vom Gefäß auf die Drucknutsche zu erklären.
a) Die Lösung des Cycloolefincopolymers in Toluol wird in das Fällungsmittel Wasser im Verhältnis von ca. 1:10 unter starkem Rühren (ca. 1000 U/min) mit einer Geschwindigkeit von ca. 0,1 l/h eingetropft. Verwendet werden ein Wendelrührer (W) und ein Propellerrührer (P). Die Konzentration der Lösung liegt bei 9 Gew.-%. Die Temperatur des Fällungsmittels liegt bei ca. 96 °C, die Polymerlösung weist Raumtemperatur auf. Das Lösungsmittel wird während der Fällung kontinuierlich abdestilliert. Nach Filtration des Fällproduktes unter Vakuum (ca. 200 mbar) wird bei 70 bis 80 °C im Vakuum getrocknet. Die Ölaufnahme wird geprüft anhand des Maschinenöls ®Nuto H 46 der Firma Esso. Beispiel 4a) wurde mit zwei verschiedenen Cycloolefincopolymeren durchgeführt. Die Ergebnisse sind in Tabelle 4 angegeben. 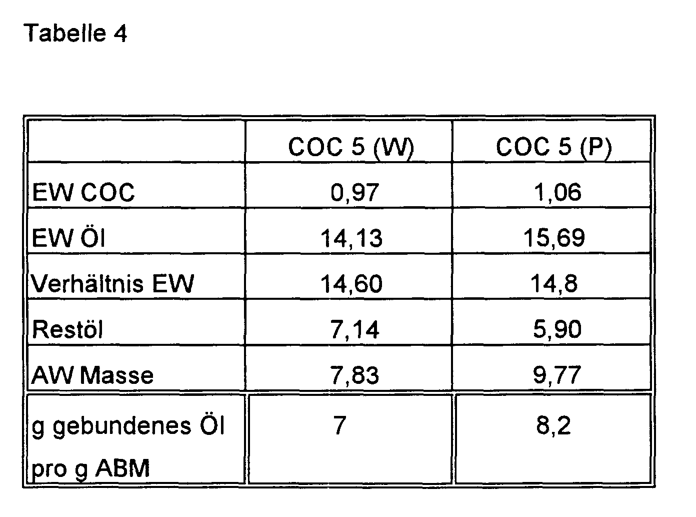
b) Die verschiedenen Cycloolefincopolymere COC 5, COC 6, COC 7 und COC 9 wurden aufgearbeitet wie in Beispiel 3 beschrieben.

Die Ölaufnahme wird geprüft durch Verwendung des Maschinenöls ®Nuto H 46 der Firma Esso, Hydrauliköl ADF 200, Altöl und ®Enerpar 1927 der Firma BP. Die Ergebnisse sind in den Tabellen 5, 6, 7 und 8 angegeben.

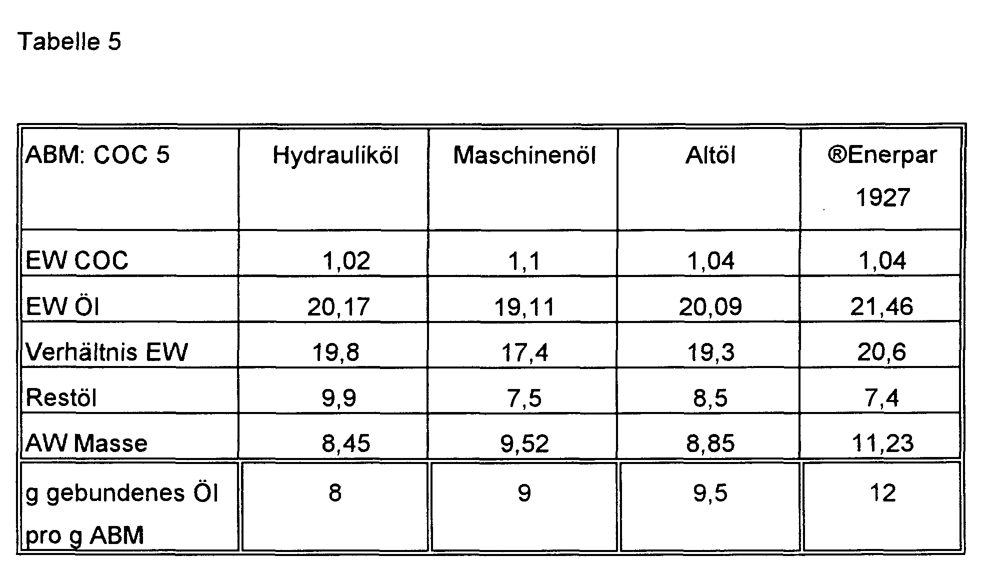

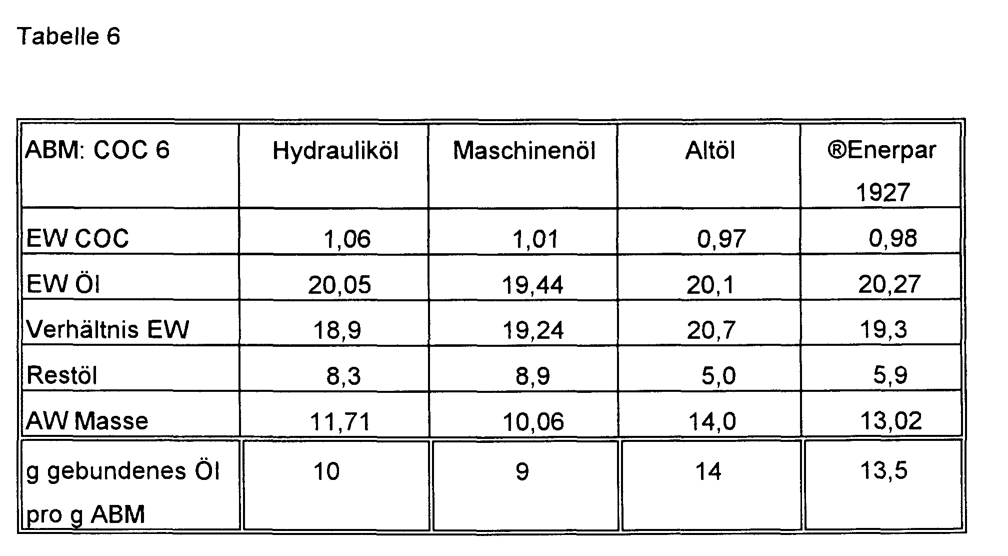

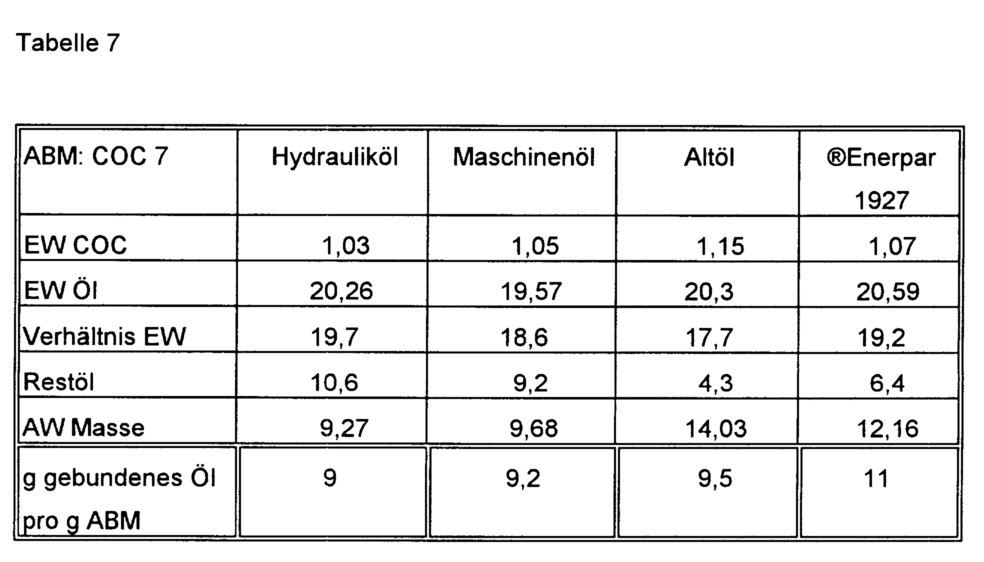

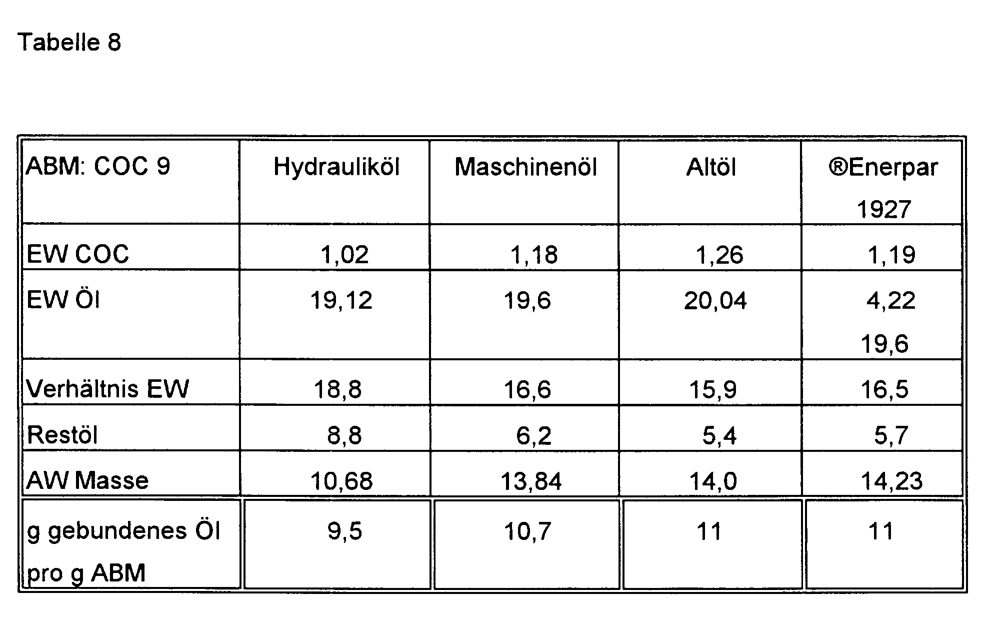

### Beispiel 5

Die Lösung eines Cycloolefincopolymers in Cyclopentan wird in das Fällungsmittel Wasser im Verhältnis von ca. 1:10 unter starkem Rühren (ca. 800 U/min) mit einer Geschwindigkeit von ca. 0,1 l/h eingetropft. Verwendet wird ein Propellerrührer. Die Temperatur des Fällungsmittels liegt bei ca. 96 °C, die Polymerlösung weist Raumtemperatur auf. Das Lösungsmittel wird während der Fällung kontinuierlich abdestilliert. Nach Filtration des Fällproduktes unter Vakuum (200 mbar) wird bei 70 °C bis 80 °C im Vakuum getrocknet. Nach der Trocknung wurde 1 g des Cycloolefincopolymers mit 12 g des Maschinenöls ®Nuto H 46 der Firma Esso versetzt und die Ölaufnahme bestimmt.

Beispiel 5 wurde mit insgesamt drei verschiedenen Cycloolefincopolymeren durchgeführt. Die Ergebnisse sind in Tabelle 9 angegeben.

**Tabelle 9**

| Bsp. | Probe | Konzentration Polymerlösung Gew-% | Tg °C | VZ ml/g | Ölaufnahme g gebundenes Öl pro g ABM | Konsistenz des ABM |
|---|---|---|---|---|---|---|
| 9a | COC 5 | 8 | 148 | 66 | 10:1 | feinflockig |
| 9b | COC 6 | 4 | 149 | 126 | 12:1 | flockig |
| 9c | COC 9 | 2.5 | 150 | 197 | 12:1 | flockig |

### Beispiel 6

In Anlehnung an die Prüfvorschrift "Ölbinderbedarf für Ölbinder Typ I, II und IV" (GMBI 1990) wurden in einen 500 ml Tropftrichter 250 ml entionisiertes Wasser gegeben und mit 5 ml Hydrauliköl ADF 200 beschichtet. Anschließend wurden verschiedene Mengen COC 8 (Tg = 149 °C, VZ = 85 ml/g) aufgetragen. Nach 10 min Rührzeit, wobei nur die Ölschicht und das Absorptionsmittel verrührt wurden, wurde das Wasser abgelassen und dann die Ölausflußmenge nach einer Stunde bestimmt. Hieraus errechnet sich die von 1g ABM gebundene Menge an Öl.

Die Ergebnisse sind in Tabelle 10 angegeben.

**Tabelle 10**

| Bsp. | Einwaage Öl g | Einwaage ABM g | Ölaufnahme g Öl / g ABM | Bemerkung |
|---|---|---|---|---|
| 6a | 4,6 | 1,0 | 5:1 | vollständig aufgesogen |
| 6b | 4,55 | 0,74 | 6:1 | vollständig aufgesogen |
| 6c | 4,46 | 0,51 | 9:1 | vollständig aufgesogen |
| 6d | 4,61 | 0,35 | 13:1 | geringer Ölrückstand an der Glaswand |
| 6e | 9,08 | 0,58 | 15:1 | Ölrückstand etwa 0,5 ml |

## Patentansprüche

1. Verwendung eines Cycloolefincopolymers als Absorptionsmittel, wobei das Cycloolefincopolymer 30 bis 99 Gew.-%, bezogen auf die Gesamtmasse des Cycloolefincopolymers, polymerisierte Einheiten enthält, die sich ableiten von mindestens einem cyclischen Olefin, und 5 bis 80 Gew.-%, bezogen auf die Gesamtmasse des Cycloolefincopolymers, polymerisierte Einheiten enthält, die sich ableiten von mindestens einem acyclischen Olefin.

2. Verwendung eines Cycloolefincopolymers gemäß Anspruch 1, wobei das cyclische Olefin polycyclisch ist.

3. Verwendung eines Cycloolefincopolymers gemäß Anspruch 1 oder 2, wobei das Absorptionsmittel 10 bis 100 Gew.-% mindestens eines Cycloolefincopolymers enthält.

4. Verwendung des Absorptionsmittels gemäß einem oder mehreren der Ansprüche 1 bis 3 zur Aufnahme von flüssigen Verunreinigungen von festen und flüssigen Oberflächen.

5. Filtereinheit enthaltend ein Absorptionsmittel, welches 10 bis 100 Gew.-% mindestens eines Cycloolefincopolymers enthält.

6. Verwendung der Filtereinheit gemäß Anspruch 5 zur Aufnahme von flüssigen Verunreinigungen aus strömenden Flüssigkeiten und Gasen.

## Claims

1. The use of a cycloolefin copolymer as absorbent, wherein the cycloolefin copolymer comprises from 30 to 99% by weight, based on the total mass of the cycloolefin copolymer, of polymerized units derived from at least one cyclic olefin and from 5 to 80% by weight, based on the total mass of the cycloolefin copolymer, of polymerized units derived from at least one acyclic olefin.

2. The use of a cycloolefin copolymer as claimed in claim 1, wherein the cyclic olefin is polycyclic.

3. The use of a cycloolefin copolymer as claimed in claim 1 or 2, wherein the absorbent comprises from 10 to 100% by weight of at least one cycloolefin copolymer.

4. The use of an absorbent as set forth in one or more of claims 1 to 3 for the absorption of liquid contamination from solid and liquid surfaces.

5. A filter unit comprising an absorbent comprising from 10 to 100% by weight of at least one cycloolefin copolymer.

6. The use of a filter unit as claimed in claim 5 for the absorption of liquid contamination from flowing liquids and gases.

## Revendications

1. Utilisation d'un copolymère cyclo-oléfinique en tant qu'agent d'absorption, le copolymère cyclo-oléfinique renfermant de 30 à 99% en poids, par rapport à la masse totale du copolymère cyclo-oléfinique, de motifs polymérisés qui sont dérivés d'au moins une oléfine cyclique, et de 5 à 80% en poids, par rapport à la masse totale du copolymère cyclo-oléfinique, de motifs polymérisés qui sont dérivés d'au moins une oléfine acyclique.

2. Utilisation d'un copolymère cyclo-oléfinique selon la revendication 1, l'oléfine cyclique étant polycyclique.

3. Utilisation d'un copolymère cyclo-oléfinique selon la revendication 1 ou 2, l'agent d'absorption comprenant de 10 à 100% en poids d'au moins un copolymère cyclo-oléfinique.

4. Utilisation de l'agent d'absorption selon l'une ou plusieures des revendications 1 à 3, en vue de capter des impuretés liquides à partir de surfaces solides et liquides.

5. Unité filtrante contenant un agent d'absorption, qui comprend de 10 à 100% en poids d'au moins un copolymère cyclo-oléfinique.

6. Utilisation de l'unité filtrante selon la revendication 5, en vue de capter des impuretés liquides à partir de liquides et de gaz en écoulement.
